(19) Europäisches Patentamt / European Patent Office / Office européen des brevets

(11) **EP 4 629 125 A1**

(12) # EUROPEAN PATENT APPLICATION
published in accordance with Art. 153(4) EPC

(43) Date of publication:
08.10.2025 Bulletin 2025/41

(21) Application number: 23896175.9

(22) Date of filing: 06.09.2023

(51) International Patent Classification (IPC):
*G06F 30/20* (2020.01)    *G06F 119/02* (2020.01)

(52) Cooperative Patent Classification (CPC):
Y04S 10/50

(86) International application number:
**PCT/CN2023/117205**

(87) International publication number:
**WO 2024/114018 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.11.2022  CN 202211525160

(71) Applicant: GOLDWIND SCIENCE & TECHNOLOGY CO., LTD.
Xinjiang 830026 (CN)

(72) Inventors:
• ZHANG, Pengfei
  Beijing 100176 (CN)
• MI, Yuxia
  Beijing 100176 (CN)
• ZHAO, Shipei
  Beijing 100176 (CN)

(74) Representative: **Hoffmann Eitle**
**Patent- und Rechtsanwälte PartmbB**
**Arabellastraße 30**
**81925 München (DE)**

(54) **POWER-GENERATION PERFORMANCE EVALUATION METHOD AND APPARATUS FOR WIND GENERATING SET**

(57) Provided in the present disclosure are a power-generation performance evaluation method and apparatus for a wind generating set. The power-generation performance evaluation method comprises: acquiring respective historical operation data of a wind generating set within n historical time periods; according to the historical operation data, determining actual capacity coefficients and theoretical capacity coefficients; on the basis of the actual capacity coefficients and the theoretical capacity coefficients, determining historical power-generation performance coefficients, so as to obtain a power generation-performance change trend; and according to the power-generation performance change trend, determining an estimated power-generation performance coefficient within a target future time period.

```
┌─────────────────────────────────────────┐
│ Acquire historical operational data of   │── S101
│ the wind turbine in each of n historical  │
│ periods                                    │
└─────────────────────────────────────────┘
              ↓
┌─────────────────────────────────────────┐
│ Determine, based on the historical        │── S102
│ operational data, a practical capacity     │
│ factor and a theoretical capacity factor   │
│ of the wind turbine in each of the n       │
│ historical periods                         │
└─────────────────────────────────────────┘
              ↓
┌─────────────────────────────────────────┐
│ Determine, based on the practical          │── S103
│ capacity factor and the theoretical        │
│ capacity factor in each of the n historical │
│ periods, a historical power generation     │
│ performance factor of the wind turbine in  │
│ each of the n historical periods           │
└─────────────────────────────────────────┘
              ↓
┌─────────────────────────────────────────┐
│ Obtain a trend of power generation         │── S104
│ performance, based on the historical       │
│ power generation performance factors in    │
│ the n historical periods                   │
└─────────────────────────────────────────┘
              ↓
┌─────────────────────────────────────────┐
│ Determine, based on the trend of power     │── S105
│ generation performance, an estimated       │
│ power generation performance factor of     │
│ the wind turbine in a target future period  │
└─────────────────────────────────────────┘
```

FIG.1

**Description**

**FIELD**

The present disclosure relates to the technical field of wind power generation, and more particularly, to a power generation performance evaluation method and apparatus for a wind turbine.

**BACKGROUND**

As the installed capacity and operating life of wind turbines on the market increase, a large number of wind turbines are about to reach their design life, or are facing upgrade issues due to changes in electricity price policies and other reasons. During an entire life cycle of a wind turbine, changes in control strategy and an operation and maintenance strategy are generally caused by failure of a large component. To improve overall revenue of the wind turbine and actualize a passive-to-proactive transform of update of the control strategy and the operation and maintenance strategy, it is to evaluate a power generation performance of an operating wind turbine, as a basis for determining a future measure on the wind turbine.

In conventional methods for evaluating a power generation performance of a wind turbine, a trend of the power generation performance of the wind turbine is mostly determined based on a power curve or power characteristic, a failure rate, or the like. In the evaluation through such methods, not only the wind turbine itself but also external environmental effects affect the power generation performance of the wind turbine. Generally, change in the power generation performance caused by the wind turbine itself is relatively mild, and change in the power generation performance caused by the environmental effects is relatively obvious. Therefore, for the change in the power generation performance of the wind turbine within a certain period of time, the change caused by the wind turbine may be covered up. Further, the environmental effects have a certain degree of volatility. Hence, it is difficult to determine the change in the power generation performance caused by the wind turbine over a long period of time.

**SUMMARY**

In view of the above, how to reliably evaluate change in a power generation performance caused by a wind turbine itself is important.

In a general aspect, a power generation performance evaluation method for a wind turbine is provided. The method includes: acquiring historical operational data of the wind turbine in each of n historical periods, where n is a positive integer; determining, based on the historical operational data, a practical capacity factor and a theoretical capacity factor of the wind turbine in each of the n historical periods; determining, based on the actual capacity factor and the theoretical capacity factor in each of the n historical periods, a historical power generation performance factor of the wind turbine in each of the n historical periods; obtaining a trend of power generation performance, based on the historical power generation performance factors in the n historical periods; and determining, based on the trend of power generation performance, an estimated power generation performance factor of the wind turbine in a target future period, where the estimated power generation performance factor is for estimating the power generation performance in the target future period.

Optionally, the determining, based on the historical operational data, a practical capacity factor and a theoretical capacity factor of the wind turbine in each of the n historical periods includes: determining, based on the historical operational data, a ratio of a practical value of a power generation indicator to a rated value of the power generation indicator of the wind turbine in each of the n historical periods, to obtain the actual capacity factor, where the power generation indicator includes at least one of a power generation duration, an on-grid electricity or a power; and determining, based on the historical operational data, a ratio of a theoretical average power to a rated power of the wind turbine in each of the n historical periods, to obtain the theoretical capacity factor.

Optionally, in a case where the power generation indicator includes a power, the historical operational data includes a practical power curve, multiple wind speed intervals, a frequency of each of the wind speed intervals, and a rated power, and the determining, based on the historical operational data, a ratio of a practical value of a power generation indicator to a rated value of the power generation indicator of the wind turbine in each of the n historical periods, to obtain the actual capacity factor, includes: for each of the historical periods, determining a practical power average of each of the wind speed intervals based on the actual power curve; determining an expectation of the actual power average as a practical average power of the wind turbine in the historical period, based on the actual power average and the frequency of each of the wind speed intervals; and determining the actual capacity factor based on a ratio of the actual average power of the wind turbine in the historical period to the rated power.

Optionally, the historical operational data further includes a theoretical power curve, and the determining, based on the historical operational data, a ratio of a theoretical average power to a rated power of the wind turbine in each of the n historical periods, to obtain the theoretical capacity factor, includes: for each of the historical periods, determining a theoretical power average of each of the wind speed intervals based on the theoretical power curve; determining an expectation of the theoretical power average as the theoretical average power of the wind turbine in the historical period, based on the theoretical power average and the frequency of each of the wind speed intervals; and determining the theoretical capacity factor based on a ratio of the theoretical average power of the wind turbine in the historical period to the rated power.

Optionally, the actual power average is an average of a practical power within a wind speed interval; and/or the theoretical power average is obtained by interpolating in the theoretical power curve based on an average wind speed in each of the wind speed intervals.

Optionally, the historical operational data includes a wind speed distribution parameter and a rated wind speed, the wind speed distribution parameter is for describing a distribution probability of wind speed, and the determining, based on the historical operational data, a ratio of a theoretical average power to a rated power of the wind turbine in each of the n historical periods, to obtain the theoretical capacity factor, includes: for each of the historical periods, determining an expectation of the third power of a wind speed based on the wind speed distribution parameter; and determining a ratio of the expectation of the third power of the wind speed to the third power of the rated wind speed, to obtain the theoretical capacity factor.

Optionally, the wind speed distribution parameter includes a probability density function of wind speed or a probability distribution function of wind speed; or the wind speed distribution parameter includes multiple wind speed intervals and frequencies of the respective wind speed intervals.

Optionally, the power generation performance evaluation method further includes: determining an estimated power generation of the wind turbine in a target future period based on the estimated power generation performance factor; and determining an estimated revenue generated by the wind turbine using a candidate control strategy of the wind turbine in the target future period, based on the estimated power generation, the candidate control strategy of the wind turbine and a revenue-related variable, where the revenue-related variable is a variable needed to determine a power generation revenue of the wind turbine.

Optionally, the revenue-related variable includes an electricity price in the target future period, a predetermined first relationship function and a predetermined second relationship function, the first relationship function indicates a relationship between a change of power generation and an adjustment of a control strategy of the wind turbine, the second relationship function indicates a relationship between a power generation and a maintenance cost of the wind turbine, and the determining an estimated revenue generated by the wind turbine using a candidate control strategy of the wind turbine in the target future period, based on the estimated power generation, the candidate control strategy of the wind turbine and a revenue-related variable, includes: determining an estimated change of power generation corresponding to the candidate control strategy of the wind turbine, based on an adjustment of the candidate control strategy of the wind turbine relative to a present control strategy of the wind turbine and the first relationship function; determining a sum of the estimated power generation and the estimated change of power generation, as an estimated total power generation corresponding to the candidate control strategy of the wind turbine; determining an estimated maintenance cost corresponding to the candidate control strategy of the wind turbine, based on the estimated total power generation and the second relationship function; and determining the estimated revenue generated by the wind turbine using the candidate control strategy of the wind turbine in the target future period, based on the estimated total power generation, the electricity price, and the estimated maintenance cost.

Optionally, the power generation performance evaluation method further includes: adjusting the candidate control strategy of the wind turbine based on the estimated revenue, to obtain an optimized control strategy of the wind turbine.

In a general aspect, a power generation performance evaluation apparatus for a wind turbine is provided. The apparatus includes: an acquisition unit, configured to acquire historical operational data of the wind turbine in each of n historical periods, where n is a positive integer; a determination unit, configured to determine, based on the historical operational data, a practical capacity factor and a theoretical capacity factor of the wind turbine in each of the n historical periods; the determination unit is further configured to determine, based on the actual capacity factor and the theoretical capacity factor in each of the n historical periods, a historical power generation performance factor of the wind turbine in each of the n historical periods; a consolidation unit, configured to obtain a trend of power generation performance, based on the historical power generation performance factors in the n historical periods; and a prediction unit, configured to determine, based on the trend of power generation performance, an estimated power generation performance factor of the wind turbine in a target future period, where the estimated power generation performance factor is for estimating the power generation performance in the target future period.

Optionally, the determination unit is further configured to: determine, based on the historical operational data, a ratio of a practical value of a power generation indicator to a rated value of the power generation indicator of the wind turbine in each of the n historical periods, to obtain the actual capacity factor, where the power generation indicator includes at least one of a power generation duration, an on-grid electricity or a power; and determine, based on the historical operational data, a ratio of a theoretical average power to a rated power of the wind turbine in each of the n historical periods, to obtain the theoretical capacity factor.

Optionally, in a case where the power generation indicator includes a power, the historical operational data includes a practical power curve, multiple wind speed intervals, a frequency of each of the wind speed intervals, and a rated power, and the determination unit is further configured to: for each of the historical periods, determine a practical power average of each of the wind speed intervals based on the actual power curve; determine an expectation of the actual power average as a practical average power of the wind turbine in the historical period, based on the actual power average and the frequency of each of the wind speed intervals; and determine a ratio of the actual average power of the wind turbine in the historical period to the rated power, to obtain the actual capacity factor.

Optionally, the historical operational data further includes a theoretical power curve, and the determination unit is further configured to: for each of the historical periods, determine a theoretical power average of each of the wind speed intervals based on the theoretical power curve; determine, based on the theoretical power average and the frequency of each of the wind speed intervals, an expectation of the theoretical power average as a theoretical average power of the wind turbine in the historical period; and determine a ratio of the theoretical average power of the wind turbine in the historical period to a rated power, to obtain the theoretical capacity factor.

Optionally, the actual power average is an average of a practical power within a wind speed interval; and/or a theoretical power average is obtained by interpolating in the theoretical power curve based on an average wind speed in a wind speed interval.

Optionally, the historical operational data includes a wind speed distribution parameter and a rated wind speed. The wind speed distribution parameter is for describing a distribution probability of wind speed. The determination unit is further configured to: for each of the historical periods, determine an expectation of the third power of the wind speed based on the wind speed distribution parameter; and determine a ratio of the expectation of the third power of the wind speed to the third power of a rated wind speed, to obtain the theoretical capacity factor.

Optionally, the wind speed distribution parameter includes a probability density function of wind speed or a probability distribution function of wind speed; or the wind speed distribution parameter includes multiple wind speed intervals and frequencies of the wind speed intervals.

Optionally, the power generation performance evaluation apparatus further includes an estimation unit, configured to: determine an estimated power generation of the wind turbine in a target future period based on the estimated power generation performance factor; and determine an estimated revenue generated by the wind turbine using a candidate control strategy of the wind turbine in the target future period, based on the estimated power generation, the candidate control strategy of the wind turbine and a revenue-related variable, where the revenue-related variable refers to a variable needed to determine a power generation revenue of the wind turbine.

Optionally, the revenue-related variable includes an electricity price in the target future period, a predetermined first relationship function and a predetermined second relationship function, the first relationship function indicates a relationship between a change of power generation and an adjustment of a control strategy of the wind turbine, the second relationship function indicates a relationship between a power generation and a maintenance cost of the wind turbine, and the estimation unit is further configured to: determine an estimated change of power generation corresponding to the candidate control strategy of the wind turbine, based on an adjustment of the candidate control strategy of the wind turbine relative to a present control strategy of the wind turbine and the first relationship function; determine a sum of the estimated power generation and the estimated change of power generation, as an estimated total power generation corresponding to the candidate control strategy of the wind turbine; determine an estimated maintenance cost corresponding to the candidate control strategy of the wind turbine, based on the estimated total power generation and the second relationship function; and determine the estimated revenue generated by the wind turbine using the candidate control strategy of the wind turbine in the target future period, based on the estimated total power generation, the electricity price, and the estimated maintenance cost.

Optionally, the power generation performance evaluation apparatus further includes an optimization unit, configured to adjust the candidate control strategy of the wind turbine based on the estimated revenue, to obtain an optimized control strategy of the wind turbine.

In another general aspect, a computer-readable storage medium is provided. Instructions in the computer-readable storage medium, when executed by at least one processor, cause the at least one processor to perform the power generation performance evaluation method as described above.

In another general aspect, a computer device is provided, including at least one processor; and at least one memory storing computer executable instructions. The computer executable instructions, when executed by the at least one processor, cause the at least one processor to perform the power generation performance evaluation method as described above.

According to the present disclosure, the historical power generation performance factor is obtained from the theoretical capacity factor and the actual capacity factor that reflects a practical power. In this way, the power generation performance of the wind turbine can be effectively evaluated. Further, a trend of power generation performance can be determined and reflects a change in the power generation performance of the wind turbine. In addition, the estimated power generation performance factor of the wind turbine in a target future period is determined based on the trend of power generation performance, so that a change in the power generation performance of the wind turbine can be reflected from a more intuitive future perspective, which provides a basis for a proactive update of a subsequent control strategy and operation and maintenance strategy of the wind turbine. In addition, use of the historical operational data of the wind turbine in the present disclosure requires no additional measurement devices, realizing a low cost for optimization and a strong portability.

It should be understood that the foregoing general description and the following detailed description are exemplary and explanatory only, and do not limit the present disclosure.

## BRIEF DESCRIPTION OF THE DRAWINGS

Figure 1 is a flow chart of a power generation performance evaluation method for a wind turbine according to an embodiment of the present disclosure;

Figure 2 is a schematic diagram illustrating a theoretical power curve according to an embodiment of the present disclosure;

Figure 3 is a schematic diagram illustrating a practical power curve according to an embodiment of the present disclosure;

Figure 4 is a schematic flow chart illustrating a scheme for optimizing a control strategy according to an embodiment of the present disclosure;

Figure 5 is a schematic flow chart of a power generation performance evaluation system for a wind turbine according to an embodiment of the present disclosure;

Figure 6 is a block diagram illustrating a power generation performance evaluation apparatus for a wind turbine according to an embodiment of the present disclosure; and

Figure 7 is a block diagram of a computing device according to an embodiment of the present disclosure.

## DETAILED DESCRIPTION

Specific embodiments are provided hereinafter to help readers to obtain a comprehensive understanding of the method, apparatus and/or system described herein. After understanding the present disclosure, various alternations, modifications, and equivalents of the method, apparatus, and/or system described herein would be clear. For example, an order of operations described herein is only exemplary and the present disclosure is not limited to the order described here. The order of operations may be changed as would be clear after understanding the present disclosure, except for operations that must occur in a specific order. In addition, description of features known in the art may be omitted, for clarity and conciseness.

The features described herein may be implemented in different forms and should not be limited to the examples described here. The examples described here are provided to illustrate only some of feasible ways of implementing the method, apparatus, and/or system described here, many other feasible ways would be clear after understanding the present disclosure.

As used herein, terms "and/or" includes any one of listed items associated with the term, and any combination of any two or more of the items.

Although terms "first," "second," "third" and the like may be used herein to describe various components, elements, regions, layers, or parts, these components, elements, regions, layers, or parts should not be limited by these terms. On the contrary, these terms are only used to distinguish one component, element, region, layer, or part from another component, component, region, layer, or part. Therefore, without departing from the teachings of the examples, a first component, first element, first region, first layer, or first part referred to in the examples described herein may be referred to as a second component, second element, second region, second layer, or second part.

In the specification, when an element (such as a layer, region, or substrate) is described as being "on", "connected to" or "coupled to" another element, the element may be directly "on", "connected to" or "coupled to" the other element, or there may be one or more intermediate elements between the elements. In contrast, when an element is described as being "directly on", "directly connected to" or "directly coupled to" another element, there is no intermediate element there between.

The terms used herein are only for describing various examples and are not intended to limit the present disclosure. Unless clearly indicated in the context otherwise, a singular form is intended to include a plural form. Terms "include", "comprise", and "have" indicate existence of a mentioned feature, quantity, operation, component, element, and/or combination thereof, but do not exclude existence or addition of one or more other features, quantities, operations, components, elements, and/or combinations thereof.

Unless otherwise defined, all terms used herein (including technical terms and scientific terms) have the same meanings as those commonly understood by ordinary technical personnel in the field to which the present disclosure belongs after understanding the present disclosure. Unless explicitly defined otherwise, terms (such as those defined in a general dictionary) should be interpreted as having meanings consistent with their respective contexts in the relevant field and in the present disclosure, and should not be interpreted ideally or too formally.

In addition, in the description of the examples, detail description of well-known relevant structures or functions are omitted, when it is believed that the detailed description may lead to ambiguity of the present disclosure.

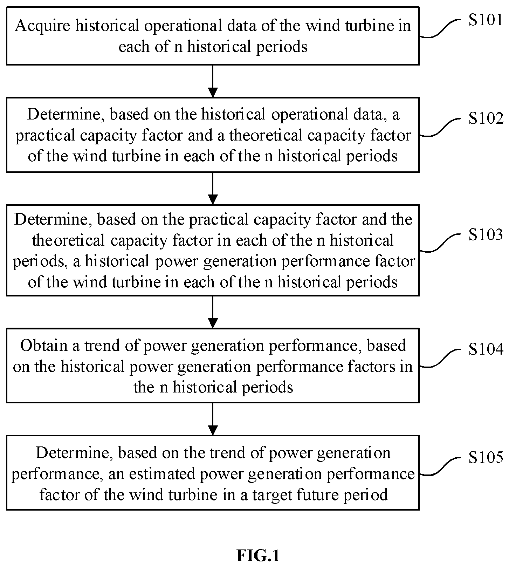

Figure 1 is a flow chart of a power generation performance evaluation method for a wind turbine according to an embodiment of the present disclosure.

Reference is made to Figure 1. In step S101, historical operational data of the wind turbine in each of n historical periods is acquired. Here, n is a positive integer. The length of each historical period may be set as needed, such as 1 month, 1 quarter, or 1 year. Different historical periods may overlap with each other. For example, for a same year, the historical operational data in months, quarters, and the whole year may be all obtained. Apparently, in such case, it is often not necessary to acquire the same data repeatedly, as long as the data can be matched with the historical period to which it belongs. For example, all historical operational data within n historical periods may be acquired, and the historical operational data is provided with timestamps. When historical operational data within a certain historical period is required, the historical operational data whose timestamp is within this historical period can be used.

The operational data reflects a real-time operating condition of the wind turbine at different time instants, including wind speed, power, and power generation, for example. As an example, the historical operational data may be obtained from Supervisory Control and Data Acquisition (SCADA). In another example, the historical operational data may be collected from various sensors installed on the wind turbine.

In step S102, a practical capacity factor and a theoretical capacity factor of the wind turbine in each of the n historical periods are determined based on the historical operational data.

A capacity factor is for reflecting an energy output condition of the wind turbine. The practical capacity factor is for reflecting a practical energy output of the wind turbine, and may refer to a ratio of a practical power generation (a practical power) of the wind turbine within a statistical period to a rated power generation (a rated power) of the wind turbine. The theoretical capacity factor is for reflecting a theoretical energy output condition of the wind turbine, and may refer to a ratio of a theoretical power generation (a theoretical power) of the wind turbine within a statistical period to a rated power generation (a rated power) of the wind turbine.

The practical power of the wind turbine is affected by a power generation performance of the wind turbine itself and environmental aspects. The theoretical power refers to a power of the wind turbine under an ideal condition (that is, when the power generation performance of the wind turbine is optimal), and reflects an influence of the environmental aspects. Therefore, a difference between the practical power and the theoretical power is caused by the wind turbine itself and reflects the power generation performance of the wind turbine itself. Furthermore, relative to the practical power and the theoretical power, both the practical capacity factor and the theoretical capacity factor introduce the rated power (which is a fixed value), and therefore a difference between the practical capacity factor and the theoretical capacity factor can reflect the difference between the practical power and the theoretical power. In this way, the needs of evaluation can be satisfied, and various methods can be applied for calculating the practical capacity factor and the theoretical capacity factor, ensuring a flexibility of the solution. By acquiring the historical operational data in each of n historical periods, the practical capacity factor and the theoretical capacity factor in each of the n historical periods can be calculated. The detailed calculation is introduced in detail later and is not described here.

In step S103, a historical power generation performance factor of the wind turbine in each of the n historical periods is determined based on the practical capacity factor and the theoretical capacity factor in each of the n historical periods.

The power generation performance factor is for characterizing the power generation performance of the wind turbine. As an example, for a historical period, a ratio of the practical capacity factor and the theoretical capacity factor of the wind turbine in the period can be determined. This ratio is equal to a ratio of the practical power to the theoretical power, and is determined as the historical power generation performance factor in the discussed historical period. Hence, a dimensionless performance factor is obtained, so that influence of the environmental aspects can be eliminated and limitation by the rated power of the wind turbine is avoided. It should be understood that the power generation performance of the wind turbine tends to decrease with the increase of operating years, and therefore the practical power is often less than the theoretical power, causing the above-mentioned ratio to be less than 1. A smaller value of the ratio indicates a greater difference between the practical power and the theoretical power, that is, a worse power generation performance of the wind turbine. In other words, a larger value of the ratio indicates a better power generation performance of the wind turbine.

In addition, the ratio may be converted into a power value. For example, an average of the theoretical powers in the n historical periods is calculated, and then the average is multiplied by the aforementioned ratio corresponding to the historical periods, respectively, to obtain the respective practical powers in the historical periods. Using the average of the theoretical powers in the n historical periods, rather than the theoretical power in a certain year, as a conversion factor can unify the determination criteria.

In step S104, a trend of power generation performance is obtained based on the historical power generation performance factors in the n historical periods. As an example, the trend of power generation performance may be obtained through a fitting method, for example but not limited to, linear fitting. As mentioned before, there may be overlap among different historical periods. For example, for a same year, historical operational data of months, quarters, and the whole year may be all obtained, and then the historical power generation performance factors of the wind turbine in the months, the quarters and the whole year can be obtained. Then, the trend of power generation performance is fitted based on the historical power generation performance factors.

In step S105, an estimated power generation performance factor of the wind turbine in a target future period is determined based on the trend of power generation performance. The estimated power generation performance factor is for estimating the power generation performance of the wind turbine in the target future period. By using the trend of power generation performance for determining the estimated power generation performance factor, a general trend is converted into a clear point value in the future. Hence, a change result of the power generation performance of the wind turbine is reflected from a more intuitive future perspective, which provides a basis for a proactive update of a subsequent control strategy and operation and maintenance strategy of the wind turbine. It should be understood that steps S101 to S104 may be executed periodically as time elapse, to evaluate a trend of the power generation performance of the wind turbine. Alternatively, the power generation performance evaluation method according to the present disclosure may be performed periodically.

Hereinafter described is how to determine the historical power generation performance factor (step S103).

Optionally, step S103 includes: determining, based on the historical operational data, a ratio of a practical value of a power generation indicator to a rated value of the power generation indicator of the wind turbine in each of the n historical periods, to obtain the practical capacity factor, where the power generation indicator includes at least one of a power generation duration, an on-grid electricity or a power; and determining, based on the historical operational data, a ratio of a theoretical average power to a rated power of the wind turbine in each of the n historical periods, to obtain the theoretical capacity factor. As mentioned before, the practical capacity factor is a ratio of the practical power to the rated power. To calculate the practical capacity factor, the ratio may be calculated by using a practical power generation duration and a rated power generation duration, which are easier to obtain, or using a practical on-grid electricity and a rated on-grid electricity. Alternatively, the practical power may be first calculated through other method, and then the ratio is calculated by using the practical power and the rated power. Hence, a flexibility of the solution is ensured. For the theoretical capacity factor, the theoretical power may be obtained through theoretical calculation. By using the theoretical average power in the targeted historical period, the theoretical power in the historical period can be characterized by using an average level of the theoretical power. In this way, a reliability of a calculation result is ensured.

Specifically, depending on data mainly involved in the historical operational data, there are two methods for determining the practical capacity factor and the theoretical capacity factor provided in the present disclosure.

One of the methods is to mainly utilize a rated wind speed of the wind turbine. A derivation process of this method is described below.

For the practical capacity factor CF, the power generation indicator used may be a power generation duration, an on-grid electricity or a power. An example in which the length of the historical period is one year is provided here. The practical capacity factor may be a ratio of the number of effective utilization hours of operation of the wind turbine in the year to the number of hours in the year. Alternatively, the practical capacity factor is, as shown in equation (1), a ratio of a practical on-grid electricity $E_{real}$ by operation of the wind turbine through the year to a rated on-grid electricity $E_{rate}$. Alternatively, the practical capacity factor is, as shown in equation (2), is a ratio of a practical average power $P_{real}$ of the wind turbine through the year to a rated power $P_{rate}$.

$$CF = \frac{E_{real}}{E_{rate}} \qquad\qquad (1)$$

$$\mathrm{CF} = \frac{P_{real}}{P_{rate}} \qquad (2)$$

For the theoretical capacity factor (also known as ideal capacity factor, ICF), the environmental aspects considered may be only the wind speed. As shown in equations (3) to (6), $P_{ideal}$, $f_w(v)$, and $P_e(v)$ represent a theoretical average power, a rated power, a probability density function of wind speed, and a power calculation function related to wind speed, respectively; and $\rho$, $C_p$, $\eta$, $A$, $v_r$, $v_{cin}$, $v_{cout}$ represent an air density, a power factor, an efficiency factor, a sweep area, a rated wind speed, a cut-in wind speed, and a cut-off wind speed, respectively. Here, $P_{ideal}$ is only related to the wind speed. By default, the other parameters ($\rho$, $C_p$, $\eta$, $A$, $v_r$) are consistent with the rated power $P_{rate}$. Then the calculation of $P_{ideal}$ may be written as (5), and $P_{rate}$ may be directly assumed as a designated value of the wind turbine. Hence, the theoretical capacity factor ICF may be expressed by equation (6).

$$P_{ideal} = \int_0^\infty P_e(v) f_w(v)\, dv, \quad P_e(v) = \begin{cases} 0 & \\ \frac{1}{2}\rho A C_p \eta v^3 & v < v_{cin} \\ & v_{cin} \le v < v_r \\ \frac{1}{2}\rho A C_p \eta v_r^{\,3} & v_r \le v < v_{cout} \\ & v \ge v_{cout} \\ 0 & \end{cases} \qquad (3)$$

$$P_{rate} = \frac{1}{2}\rho A C_p \eta v_r^{\,3} \qquad (4)$$

$$P_{ideal} = P_{rate} \frac{\int_0^\infty v^3 f_w(v)\, dv}{v_r^{\,3}} \qquad (5)$$

$$\mathrm{ICF} = \frac{P_{ideal}}{P_{rate}} = \frac{\int_0^\infty v^3 f_w(v)\, dv}{v_r^{\,3}} = \frac{\sum_0^\infty v_i^{\,3} f_i}{v_r^{\,3}} \qquad (6)$$

Based on the above derivation, optionally, the historical operational data includes a wind speed distribution parameter and a rated wind speed. The wind speed distribution parameter is for describing a distribution probability of wind speed. The step S103 of determining the theoretical capacity factor in each of the n historical periods includes: for each of the historical periods, determining an expectation of the third power of the wind speed based on the wind speed distribution parameter; and determining a ratio of the expectation of the third power of the wind speed to the third power of a rated wind speed, to obtain the theoretical capacity factor. By utilizing the consistency between the theoretical average power $P_{ideal}$ and the rated power $P_{race}$, the theoretical capacity factor ICF can be determined from the wind speed distribution parameter and the rated wind speed $v_r$, so that the simplicity and reliability of the calculation is ensured.

Optionally, referring to equation (6), the wind speed distribution parameter may be described in the following two forms.

(1) The wind speed distribution parameter includes a probability density function $f_w(v)$ of wind speed or a probability distribution function of wind speed. The probability density function $f_w(v)$ of wind speed or the probability distribution function $F(v)$ of wind speed may be obtained, theoretically, by using a special distribution type. Hence, feasibility of calculation is improved. It should be understood that the probability density function $f_w(v)$ of wind speed is the first derivative of the probability distribution function $F(v)$ of wind speed.

As an example, assuming that the acquired wind speed data includes only an average wind speed $v_{ave}$, the wind speed distribution may follow the Rayleigh distribution, and the probability distribution function of wind speed is:

$$F(v) = 1 - e^{-\pi\left(\frac{v}{2 v_{ave}}\right)^2} \qquad (7)$$

For a situation where the probability distribution function of wind speed is available, it is not necessary to calculate the probability density function $f_w(v)$ of wind speed. Given a wind speed, a probability of the wind speed can be calculated from the probability distribution function of wind speed, for example, by using equation (7). By taking sufficient wind speed points and calculating their probabilities, the integral problem can be transformed into a differential problem, so that the calculation difficulty is reduced and a computing resource is saved.

(2) The wind speed distribution parameter includes multiple wind speed intervals and a frequency $f_i$ of each of the wind speed intervals. For a statistical period, the frequency $f_i$ of a wind speed interval refers to a percentage of a sum of durations of a wind speed within the wind speed interval to a total duration of the statistical period, referring to equation (6). In this case, no integration problem is involved and the calculation can be directly performed based on statistic data, so that the difficulty of calculation is reduced. As an example, assuming that the acquired wind speed data is sufficient (in line with the definition of a large statistical sample, that is, the sample size n≥30), wind speed intervals may be defined from the cut-in wind speed $v_{cin}$ to the cut-out wind speed $v_{cout}$ by a determined interval length (such as 0.5m/s), and probability statistics is conducted based on the intervals to obtain the frequency $f_i$.

Further, a performance radio (PR) may be defined as the historical power generation performance factor of the wind turbine, as shown in equation (8), which characterizes the power generation performance of the wind turbine with the influence of wind speed removed.

$$PR = \frac{CF}{ICF} \tag{8}$$

The other of the methods is to mainly utilize a power curve of the wind turbine.

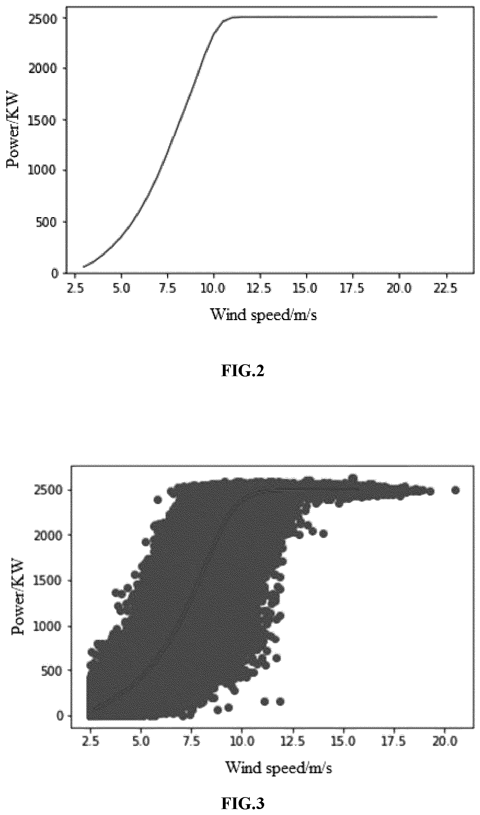

As an example, Figure 2 shows a theoretical power curve of a wind turbine at a turbulence intensity of 0.1 (the turbulence intensity 0.1 selected here is only a reference value for the case, and the theoretical power curve may be specifically determined based on a model design parameter). Figure 3 shows a practical power curve of the wind turbine (which is obtained by screening the data, defining wind speed intervals from the cut-in wind speed $v_{cin}$ to the cut-out wind speed $v_{cout}$ by a determined interval length (such as 0.5m/s), and calculating an average of the practical power). The frequency $f_i$ of each of the wind speed intervals can be obtained, and the theoretical capacity factor ICF, the practical capacity factor CF can be calculated through equations (9) and (10).

$$ICF = \frac{\sum_i^N P_{ideal}(i) \times f_i}{P_{rate}} \tag{9}$$

$$CF = \frac{\sum_i^N P_{real}(i) \times f_i}{P_{rate}} \tag{10}$$

Here, $P_{ideal}(i)$ is obtained by interpolating the average wind speed of each wind speed interval to the theoretical power curve, $P_{real}(i)$ represents the power average of each wind speed interval, and $f_i$ represents the frequency of each wind speed interval.

Optionally, in a case where the power generation indicator includes a power, the historical operational data includes a practical power curve, multiple wind speed intervals, a frequency of each of the wind speed intervals, and a rated power. The step S103 of determining a practical capacity factor in each of the n historical periods includes: for each of the historical periods, determining a practical power average of each of the wind speed intervals based on the practical power curve; determining, based on the practical power average and the frequency of each of the wind speed intervals, an expectation of the practical power average as a practical average power of the wind turbine in the historical period; and determining the practical capacity factor based on a ratio of the practical average power of the wind turbine in the historical period to the rated power. The practical power curve integrates the discrete data of the practical power detected during operation of the wind turbine. By determining the practical average power in the historical period based on the practical power curve, the detected data can be directly used, so that the difficulty of calculation is reduced. As an example, the practical power average is an average of the practical power within a wind speed interval. The average may be calculated based on the detected data, which is in accordance with the detected data and thereby ensures the consistency of the solution.

Optionally, the historical operational data further includes a theoretical power curve, and the step S103 of determining the theoretical capacity factor in each of the n historical periods includes: for each of the historical periods, determining a theoretical power average of each of the wind speed intervals based on the theoretical power curve; determining, based on the theoretical power average and the frequency of each of the wind speed intervals, an expectation of the theoretical power average as a theoretical average power of the wind turbine in the historical period; and determining the theoretical capacity factor based on a ratio of the theoretical average power of the wind turbine in the historical period to a rated power. The theoretical power curve is obtained through theoretical calculation based on the designed ideal state of the wind turbine. By determining the theoretical average power in the historical period based on the theoretical power curve, the theoretical average power in each wind speed interval can be directly used, so that the difficulty of calculation is reduced. As an example, the theoretical power average is obtained by interpolating in the theoretical power curve based on the average wind speed in each wind speed interval. Hence, a specific value can be obtained from the theoretical continuous curve, which is convenient and ensures reliability of the value.

Further utilization of the estimated power generation performance factor determined in step S105 is introduced next.

In some embodiments, after step S105, the power generation performance evaluation method according to an embodiment of the present disclosure further includes: determining an estimated power generation of the wind turbine in a target future period based on the estimated power generation performance factor; and determining an estimated revenue generated by the wind turbine using a candidate control strategy of the wind turbine in the target future period, based on the estimated power generation, the candidate control strategy of the wind turbine and a revenue-related variable. Here, the revenue-related variable refers to a variable needed to determine the power generation revenue of the wind turbine. The estimated power generation performance factor reflects the power generation performance of the wind turbine in the target future period, and can be utilized for determining the estimated power generation in the target future period. The control strategy adopted by the wind turbine is reflected by values of multiple parameters such as a cut-out wind speed, a rated power, and a rated rotational speed. The difference between control strategies lies in differences of specific values of the parameters such as the cut-out wind speed, the rated power, and the rated rotational speed. Therefore, an adjustment of the control strategy is to adjust a value of at least one of the parameters. For example, the cut-out wind speed may be extended, the rated power may be adjusted, or the rated rotational speed may be adjusted. The power generation of the wind turbine varies when different control strategies are adopted. By combining the estimated power generation and the candidate control strategy of the wind turbine, the power generation can be estimated more accurately. Additionally, with the revenue-related variable, an estimated revenue by using a certain candidate control strategy of the wind turbine can be determined. Hence, an estimated result is clearer and more intuitive, providing a clear basis for a proactive update of a subsequent control strategy and operation and maintenance strategy for the wind turbine. It should be understood that the number of target future periods may be at least one, so that an estimated revenue in at least one target future period can be determined as needed. In a case where there are multiple target future periods, a sum of multiple estimated revenues may be further calculated to understand an overall estimated revenue.

Optionally, the revenue-related variable includes an electricity price in the target future period, a predetermined first relationship function and a predetermined second relationship function. The first relationship function indicates a relationship between change of power generation and adjustment of a control strategy of the wind turbine. The adjustment of the control strategy of the wind turbine is an adjustment amount of the value of at least one of the aforementioned control parameters such as the cut-out wind speed, the rated power, and the rated rotational speed. The first relationship function reflects how much the power generation changes relative to the present power generation after a certain adjustment of the parameters based on the present control strategy of the wind turbine. Since the control strategy of the wind turbine is not adjusted when determining the estimated power generation, the predicted result indicates the amount of electricity that the wind turbine can generate by continuing applying the present control strategy of the wind turbine. In this case, based on a difference between the candidate control strategy of the wind turbine and the present control strategy of the wind turbine, and in combination with the first relationship function, a change of power generation to be brought about by the candidate control strategy of the wind turbine can be determined. As an example, the candidate control strategy of the wind turbine may be embodied in a form of an adjustment amount of a control parameter or in a form of a value of a control parameter, which is not limited by the present disclosure. The second relationship function indicates a relationship between power generation and a maintenance cost of the wind turbine. Here, the step of determining an estimated revenue generated by the wind turbine using a candidate control strategy of the wind turbine in the target future period, based on the estimated power generation, the candidate control strategy of the wind turbine and a revenue-related variable, including: determining an estimated change of power generation corresponding to the candidate control strategy of the wind turbine, based on an adjustment of the candidate control strategy of the wind turbine relative to a present control strategy of the wind turbine and the first relationship function; determining a sum of the estimated power generation and the estimated change of power generation, as an estimated total power generation corresponding to the candidate control strategy of the wind turbine; determining an estimated maintenance cost corresponding to the candidate control strategy of the wind turbine, based on the estimated total power generation and the second relationship function; and determining the estimated revenue generated by the wind turbine using the candidate control strategy of the wind turbine in the target future period, based on the estimated total power generation, an electricity price, and the estimated maintenance cost. The estimated change of power generation, the estimated total power generation, and the estimated maintenance cost caused by the candidate control strategy of the wind turbine are determined sequentially, and an estimated income of power generation is further determined based on the electricity price and the estimated total power generation. Hence, a difference between the estimated income of power generation and the estimated maintenance cost can be obtained as the estimated revenue.

The calculation is logically clear, ensuring the reliability of the estimated result.

It should be understood that the first relationship function may be obtained through preliminary simulation and reflects a relationship between a change of power generation and an adjustment amount of the control strategy of the wind turbine. As mentioned above, the control strategy adopted by the wind turbine is reflected by values of parameters. Therefore, adjustment on the candidate control strategy of the wind turbine may be reflected as an adjustment of a value of a specific parameter. Here, the adjustment of a value may be an absolute value or a relative value, as long as it reflects the adjustment. The second relationship function may be obtained based on a historical power generation and a historical maintenance cost. Data amount of the historical power generation and the historical maintenance cost increases as time elapses, and therefore the second relationship function can be updated continuously to improve an accuracy thereof.

Optionally, according to an embodiment of the present disclosure, the power generation performance evaluation method further includes: adjusting the candidate control strategy of the wind turbine based on the estimated revenue, to obtain an optimized control strategy of the wind turbine. For each candidate control strategy of the wind turbine, an estimated revenue may be determined through the above method. In view of this, one of multiple candidate control strategies of the wind turbine may be selected, based on the estimated revenues, as the optimized control strategy of the wind turbine, realizing a proactive update of a subsequent control strategy and operation and maintenance strategy of the wind turbine. It should be understood that selection from the multiple candidate control strategies of the wind turbine may be implemented by: enumerating the candidate control strategies of the wind turbine in advance, calculating the estimated revenue of each of the candidate control strategies, and then selecting one from the candidate control strategies; or giving an initial value of a candidate control strategy of the wind turbine, and then performing iterative calculation on the candidate control strategy with a purpose of the estimated revenue meeting a preset condition (for example, but not limited to, maximizing the estimated revenue), to obtain the optimized control strategy of the wind turbine. Furthermore, target revenue may be set by the user, and the estimated revenue corresponding to the control strategy of the wind turbine is optimized to meet the target revenue. It should be further understood that in a case where the target future period is in a quantity of more than one, the optimized control strategy of the wind turbine may be determined separately for each target future period. In this case, to determine the optimized control strategy of the wind turbine through iterative calculation, the calculation may be performed with a purpose of a sum of estimated revenues in multiple target future periods meeting a preset condition, so that overall revenue is considered.

A specific embodiment from estimating the power generation performance factor to optimizing a control strategy of the wind turbine is introduced next.

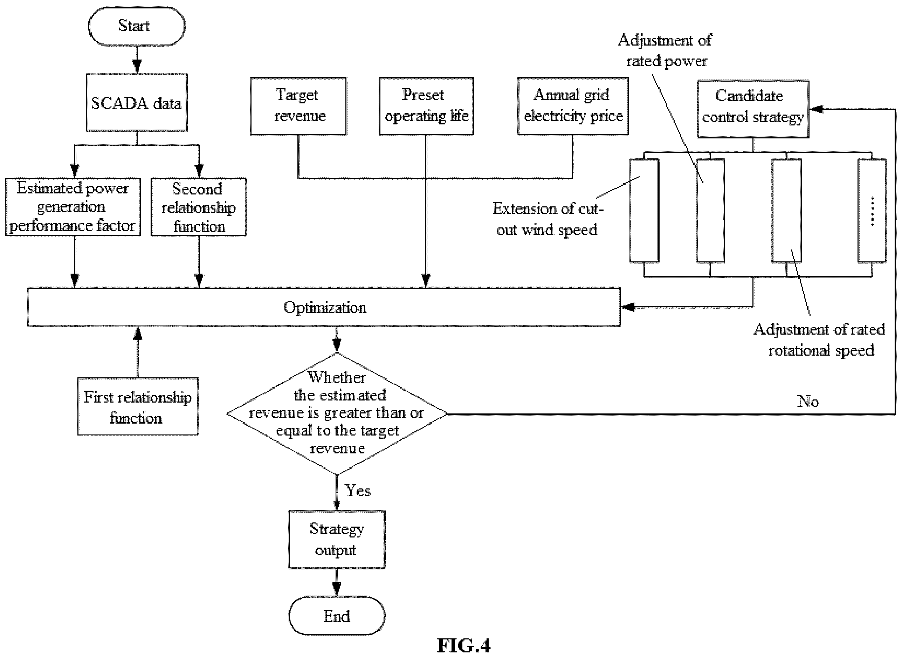

Figure 4 shows a schematic flow chart of a specific embodiment. Reference is made to Figure 4. In this specific embodiment, the following factors are adopted as an input: an estimated power generation performance factor, a second relationship function between a power generation and a maintenance cost of the wind turbine, a target revenue set by a user, a preset operating life of the wind turbine, an annual grid electricity price, an initial value of a candidate control strategy of the wind turbine, and a first relationship function between change of power generation and adjustment of a control strategy of the wind turbine. An objective function is to maximize an estimated revenue. Optimization is performed, in which the candidate control strategy of the wind turbine is adjusted continuously, with a purpose of optimizing the estimated revenue corresponding to the control strategy of the wind turbine to meet the target revenue. Thereby, an optimal control strategy of the wind turbine is obtained with considerations of the target revenue, a maintenance cost, and a present power generation of the wind turbine, the annual grid electricity price, and the set operating years.

Specifically, regarding the second relationship function between a power generation and maintenance cost of the wind turbine, the maintenance cost of the wind turbine increases as the power generation of the wind turbine increases. Therefore, there is a positive correlation between the two. The relationship may be obtained by fitting data of annual power generation with data of annual maintenance cost, which data is from SCADA data of operational periods of the wind turbine. As shown in the following equation (11), where E represents the power generation, M represents the maintenance cost of the wind turbine, f(E, M) represents the second relationship function between the power generation and the maintenance cost of the wind turbine, the maintenance cost required for the wind turbine can be calculated based on a set power generation.

$$E = f(E, M) \times M \qquad (11)$$

Regarding the candidate control strategy of the wind turbine, every adjustment of the control strategy, such as extension of the cut-out wind speed, change in the rated power, or change in the rated rotational speed, causes change in the power generation of the wind turbine. The first relationship function of the power generation caused by the adjustment of the control strategy may be obtained through preliminary simulation. For example, from the simulation, changes of the power generation of the wind turbine caused by an adjustment on the control strategy are as shown in Table 1 below, where the adjustment is to: with each extension of the cut-out wind speed by 0.5m/s, (considering a storm or other condition), adjust the rated power by 5% and adjust the rated rotational speed by 0.5%. Through simulation library calculations, the relationship between change of power generation and adjustment of the control strategy of the wind turbine can be obtained. The adjustment (0.5m/s, 5%, and 0.5%) are only example values, and may be set according to a specific model during practical simulation.

Table 1

| Impact of adjustment of rated power | $P_{rate}$ +5% | $P_{rate}$ +10% | $P_{rate}$ +15% | $P_{rate}$ +20% | $P_{rate}$ +25% | $P_{rate}$ +35% | $P_{rate}$ +45% | ... ... |
|---|---|---|---|---|---|---|---|---|
| | E + $\Delta E_{11}$ | E + $\Delta E_{12}$ | E + $\Delta E_{13}$ | E + $\Delta E_{14}$ | E + $\Delta E_{15}$ | E + $\Delta E_{16}$ | E + $\Delta E_{17}$ | ... ... |
| Impact of adjustment of cut-out wind speed | $V_{cutout}$ +0.5m/s | $V_{cutout}$ +1m/s | $V_{cutout}$ +1.5m/s | $V_{cutout}$ +2m/s | $V_{cutout}$ +2.5m/s | $V_{cutout}$ +3m/s | $V_{cutout}$ +3.5m/s | ... ... |
| | E + $\Delta E_{21}$ | E + $\Delta E_{22}$ | E + $\Delta E_{23}$ | E + $\Delta E_{24}$ | E + $\Delta E_{25}$ | E + $\Delta E_{26}$ | E + $\Delta E_{27}$ | ... ... |
| Impact of adjustment of rated rotational speed | $R_{rate}$ +0.5% | $R_{rate}$ +1% | $R_{rate}$ +1.5% | $R_{rate}$ +2% | $R_{rate}$ +2.5% | $R_{rate}$ +3% | $R_{rate}$ +3.5% | ... ... |
| | E + $\Delta E_{31}$ | E + $\Delta E_{32}$ | E + $\Delta E_{33}$ | E + $\Delta E_{34}$ | E + $\Delta E_{35}$ | E + $\Delta E_{36}$ | E + $\Delta E_{37}$ | ... ... |
| ... | ... | ... | ... | ... | ... | ... | ... | ... ... |
| Summary | C + $\Delta$C | | | | | | | |
| | E + $\Delta$E | | | | | | | |

In summary, as shown in the following equation (12), $\Delta E$ represents the change of power generation, $\Delta C$ represents the adjustment of the control strategy of the wind turbine, and f($\Delta$E, $\Delta$c) represents the first relationship function between change of power generation and the adjustment of the control strategy of the wind turbine. The function f($\Delta$E, $\Delta$c) may be obtained by summarizing a relationship between a power generation $E + \Delta E$ and a control strategy $C + \Delta C$ of the wind turbine. Through the following equation (12), the change in power generation caused by the adjustment of the control strategy of the wind turbine can be calculated.

$$\Delta E = f(\Delta E, \Delta c) \times \Delta C \qquad (12)$$

To sum up, in this embodiment, the estimated revenue in m years of operation of the wind turbine can be calculated through the following equation (13) and equation (14). In the equation, G represents an estimated total revenue over m years, $Price_i$ represents an electricity price in a year, $E_i$ represents an estimated total power generation in a year, $\overline{P_{ideal}}$ represents an average of the theoretical power, which may equal to an average of the theoretical power in historical periods obtained previously. Alternatively, a power in a target future period may be further estimated, and thereby an average of the theoretical power in both the historical periods and the target future period is determined. Here, *hour* represents the number of generating hours per year. An objective function is set as max(G). The control strategy is continuously adjusted by adding to the power generation of the wind turbine per year. Maintenance cost of the wind turbine is comprehensively considered. Optimization is performed to obtain the optimal control strategy of the wind turbine with the purpose of maximizing the objective function.

$$G = \sum_{i=1}^{m} E_i \times Price_i - \frac{E_i}{f(E, M)} \qquad (13)$$

$$E_i = PR \times \overline{P_{ideal}} \times hour + f(\Delta E, \Delta c) \times \Delta C \qquad (14)$$

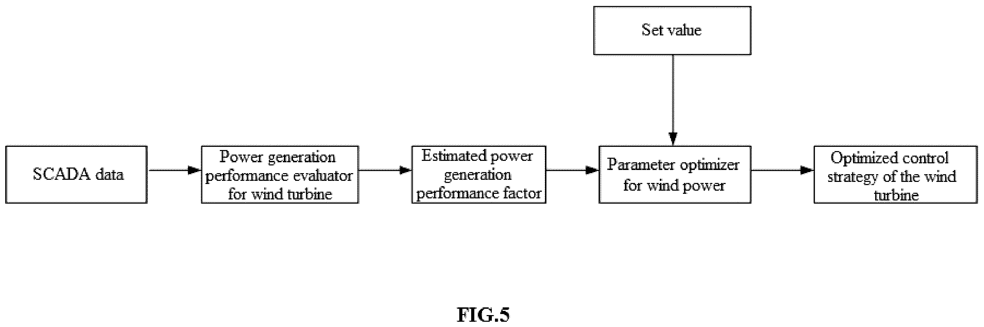

According to the embodiment of the present disclosure, the power generation performance evaluation method for a wind turbine may be performed by a plant-level controller of a wind power plant, or may be performed by a controller of the wind turbine, or may be performed by an independent system for power generation performance evaluation. The independent system for power generation performance evaluation may include a power generation performance evaluator for a wind turbine and a parameter optimizer for the wind turbine. Reference is made to Figure 5. The power generation performance evaluator is configured to evaluate a historical power generation performance factor, a trend of power generation performance, and an estimated power generation performance factor. The parameter optimizer is configured to determine an estimated power generation and an optimized control strategy of the wind turbine based on the estimated power generation performance factor.

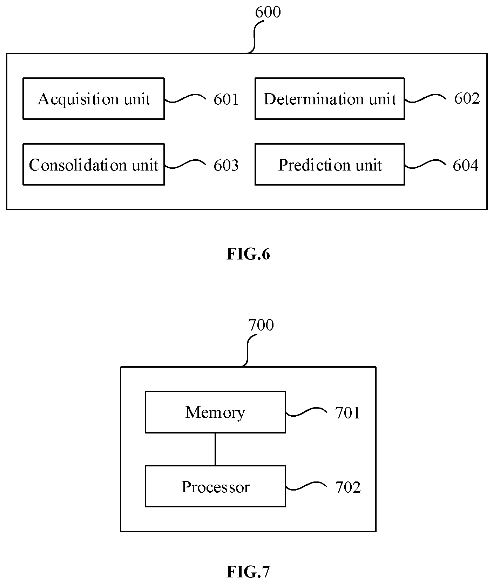

Figure 6 is a block diagram illustrating a power generation performance evaluation apparatus for a wind turbine according to an embodiment of the present disclosure.

Reference is made to Figure 6. The power generation performance evaluation apparatus 600 for the wind turbine includes an acquisition unit 601, a determination unit 602, a consolidation unit 603, and a prediction unit 604.

The acquisition unit 601 may be configured to acquire historical operational data of the wind turbine in each of n historical periods, where n is a positive integer. The operational data reflects a real-time operating condition of the wind turbine at different time instants, including wind speed, power, and power generation, for example. As an example, the historical operational data may be obtained from SCADA. In another example, the historical operational data may be collected from various sensors installed on the wind turbine.

The determination unit 602 may be configured to determine, based on the historical operational data, a practical capacity factor and a theoretical capacity factor of the wind turbine in each of the n historical periods.

A capacity factor is for reflecting an energy output condition of the wind turbine. The practical capacity factor is for reflecting a practical energy output condition of the wind turbine, and may refer to a ratio of a practical power generation (a practical power) of the wind turbine within a statistical period to a rated power generation (a rated power) of the wind turbine. The theoretical capacity factor is for reflecting a theoretical energy output condition of the wind turbine, and may refer to a ratio of a theoretical power generation (a theoretical power) of the wind turbine within a statistical period to a rated power generation (a rated power) of the wind turbine.

The practical power of the wind turbine is affected by a power generation performance of the wind turbine itself and environmental aspects. The theoretical power refers to a power of the wind turbine under an ideal condition (that is, when the power generation performance of the wind turbine is optimal), and reflects an influence of the environmental aspects. Therefore, a difference between the practical power and the theoretical power is caused by the wind turbine itself and reflects the power generation performance of the wind turbine itself. Furthermore, relative to the practical power and the theoretical power, both the practical capacity factor and the theoretical capacity factor introduce the rated power (which is a fixed value), and therefore a difference between the practical capacity factor and the theoretical capacity factor can reflect the difference between the practical power and the theoretical power. In this way, the needs of evaluation can be satisfied, and various methods can be applied for calculating the practical capacity factor and the theoretical capacity factor, ensuring a flexibility of the solution. By acquiring the historical operational data in each of n historical periods, the practical capacity factor and the theoretical capacity factor in each of the n historical periods can be calculated. The detailed calculation is introduced in detail later and is not described here.

The determination unit 602 may be further configured to determine a historical power generation performance factor of the wind turbine in each of the n historical periods based on the practical capacity factor and the theoretical capacity factor in each of the n historical periods.

The power generation performance factor is for characterizing the power generation performance of the wind turbine. As an example, for a historical period, the determination unit 602 may be configured to: determine a ratio of the practical capacity factor and the theoretical capacity factor of the wind turbine in the period. This ratio is equal to a ratio of the practical power to the theoretical power, and is determined as the historical power generation performance factor in the discussed historical period. Hence, a dimensionless performance factor is obtained, so that influence of the environmental aspects can be eliminated and limitation by the rated power of the wind turbine is avoided. It should be understood that the power generation performance of the wind turbine tends to decrease with the increase of operating years, and therefore the practical power is often less than the theoretical power, causing the above-mentioned ratio to be less than 1. A smaller value of the ratio indicates a greater difference between the practical power and the theoretical power, that is, a worse power generation performance of the wind turbine. In other words, a larger value of the ratio indicates a better power generation performance of the wind turbine.

In addition, the determination unit 602 may be configured to convert the ratio into a power value. For example, an average of the theoretical powers in the n historical periods is calculated, and then the average is multiplied by the aforementioned ratio corresponding to the historical periods, respectively, to obtain the respective practical power in the historical periods. Using the average of the theoretical powers in the n historical periods, rather than the theoretical power in a certain year, as a conversion factor can unify the determination criteria.

The consolidation unit 603 may be configured to obtain a trend of power generation performance, based on the historical power generation performance factors in the n historical periods. As an example, the trend of power generation performance may be obtained through a fitting method, for example but not limited to, linear fitting.

The prediction unit 604 may be configured to determine, based on the trend of power generation performance, an estimated power generation performance factor of the wind turbine in a target future period, where the estimated power generation performance factor is for estimating the power generation performance of the wind turbine in the target future period. By using the trend of power generation performance for determining the estimated power generation performance factor, a general trend is converted into a clear point value in the future. Hence, a change result of the power generation performance of the wind turbine is reflected from a more intuitive future perspective, which provides a basis for a proactive update of a subsequent control strategy and operation and maintenance strategy of the wind turbine. It should be understood that steps S101 to S104 may be executed periodically as time elapse, to evaluate a trend of the power generation performance of the wind turbine. Alternatively, the power generation performance evaluation apparatus 600 according to the present disclosure may operate periodically.

optionally, the determination unit 602 may be further configured to: determine, based on the historical operational data, a ratio of a practical value of a power generation indicator to a rated value of the power generation indicator of the wind turbine in each of the n historical periods, to obtain the practical capacity factor, where the power generation indicator includes at least one of a power generation duration, an on-grid electricity or a power; and determine, based on the historical operational data, a ratio of a theoretical average power to a rated power of the wind turbine in each of the n historical periods, to obtain the theoretical capacity factor. As mentioned before, the practical capacity factor is a ratio of the practical power to the rated power. To calculate the practical capacity factor, the ratio may be calculated by using a practical power generation duration and a rated power generation duration, which are easier to obtain, or using a practical on-grid electricity and a rated on-grid electricity. Alternatively, the practical power may be first calculated through other method, and then the ratio is calculated by using the practical power and the rated power. Hence, a flexibility of the solution is ensured. For the theoretical capacity factor, the theoretical power may be obtained through theoretical calculation. By using the theoretical average power in the targeted historical period, the theoretical power in the historical period can be characterized by using an average level of the theoretical power. In this way, a reliability of a calculation result is ensured.

Optionally, in a case where the power generation indicator includes a power, the historical operational data includes a practical power curve, multiple wind speed intervals, a frequency of each of the wind speed intervals, and a rated power. The determination unit 602 may be further configured to: for each of the historical periods, determine a practical power average of each of the wind speed intervals based on the practical power curve; determine an expectation of the practical power average as a practical average power of the wind turbine in the historical period, based on the practical power average and the frequency of each of the wind speed intervals; and determine the practical capacity factor based on a ratio of the practical average power of the wind turbine in the historical period to the rated power. The practical power curve integrates the discrete data of the practical power detected during operation of the wind turbine. By utilizing the practical power curve when determining the practical average power in the historical period, the detected data can be directly used, so that the difficulty of calculation is reduced. As an example, the practical power average is an average of the practical power within a wind speed interval. The average may be calculated based on the detected data, which is in accordance with the detected data and thereby ensures the consistency of the solution.

Optionally, the historical operational data further includes a theoretical power curve, and the determination unit 602 may be further configured to: for each of the historical periods, determine a theoretical power average of each of the wind speed intervals based on the theoretical power curve; determine, based on the theoretical power average and the frequency of each of the wind speed intervals, an expectation of the theoretical power average as a theoretical average power of the wind turbine in the historical period; and determine the theoretical capacity factor based on a ratio of the theoretical average power of the wind turbine in the historical period to a rated power. The theoretical power curve is obtained through theoretical calculation based on the designed ideal state of the wind turbine. By considering the theoretical power curve when determining the theoretical average power in the historical period, the theoretical average power in each wind speed interval can be directly used, so that the difficulty of calculation is reduced, and the computing resource is saved. As an example, the theoretical power average is obtained by interpolating in the theoretical power curve based on an average wind speed in each wind speed interval. Hence, a specific value can be obtained from the theoretical continuous curve, which is convenient and ensures reliability of the value.

Optionally, the historical operational data includes a wind speed distribution parameter and a rated wind speed. The wind speed distribution parameter is for describing a distribution probability of wind speed. The determination unit 602 may be further configured to: for each of the historical periods, determine an expectation of the third power of the wind speed based on the wind speed distribution parameter; and determine a ratio of the expectation of the third power of the wind speed to the third power of a rated wind speed, to obtain the theoretical capacity factor. By utilizing the consistency between the theoretical average power and the rated power, the theoretical capacity factor can be determined from the wind speed distribution parameter and the rated wind speed, so that the simplicity and reliability of the calculation is ensured.

Optionally, the wind speed distribution parameter includes a probability density function of wind speed or a probability distribution function of wind speed. The probability density function of wind speed or the probability distribution function of wind speed may be obtained, theoretically, by using a special distribution type. Hence, feasibility of calculation is improved.

Optionally, the wind speed distribution parameter includes multiple wind speed intervals and a frequency of each of the wind speed intervals. No integration problem is involved and the calculation can be directly performed based on statistic data, so that the difficulty of calculation is reduced.

Optionally, the power generation performance evaluation apparatus further includes an estimation unit (not shown in the figure). The estimation unit may be configured to: determine an estimated power generation of the wind turbine in a target future period based on the estimated power generation performance factor; and determine an estimated revenue generated by the wind turbine using a candidate control strategy of the wind turbine in the target future period, based on the estimated power generation, the candidate control strategy of the wind turbine and a revenue-related variable. Here, the revenue-related variable refers to a variable needed to determine the power generation revenue of the wind turbine. The estimated power generation performance factor reflects the power generation performance of the wind turbine in the target future period, and can be utilized for determining the estimated power generation in the target future period. The control strategy adopted by the wind turbine is reflected by values of multiple parameters such as cut-out wind speed, rated power, and rated rotational speed. The difference between control strategies lies in differences of specific values of the parameters such as the cut-out wind speed, the rated power, and the rated rotational speed. Therefore, an adjustment of the control strategy is to adjust a value of at least one of the parameters. For example, the cut-out wind speed may be extended, the rated power may be adjusted, or the rated rotational speed may be adjusted. The power generation of the wind turbine varies when different control strategies are adopted. By combining the estimated power generation and the candidate control strategy of the wind turbine, the power generation can be estimated more accurately. Additionally, with the revenue-related variable, an estimated revenue by using a certain candidate control strategy of the wind turbine can be determined. Hence, an estimated result is clearer and more intuitive, providing a clear basis for a proactive update of a subsequent control strategy and operation and maintenance strategy for the wind turbine. It should be understood that the number of target future periods may be at least one, so that an estimated revenue in at least one target future period can be determined as needed. In a case where there are multiple target future periods, a sum of multiple estimated revenues may be further calculated to understand an overall estimated revenue.

Optionally, the revenue-related variable includes an electricity price in the target future period, a predetermined first relationship function and a predetermined second relationship function. The first relationship function indicates a relationship between change of power generation and adjustment of the control strategy of the wind turbine. The adjustment of the control strategy of the wind turbine is an adjustment amount of the value of at least one of the aforementioned control parameters such as the cut-out wind speed, the rated power, and the rated rotational speed. The first relationship function reflects how much the power generation changes relative to the present power generation after a certain adjustment of the parameters based on the present control strategy of the wind turbine. Since the control strategy of the wind turbine is not adjusted when determining the estimated power generation, the estimated result indicates the amount of electricity that the wind turbine can generate by continuing applying the present control strategy of the wind turbine. In this case, based on a difference between the candidate control strategy of the wind turbine and the present control strategy of the wind turbine, and in combination with the first relationship function, a change of power generation to be brought about by the candidate control strategy of the wind turbine can be determined. As an example, the candidate control strategy of the wind turbine may be embodied in a form of an adjustment amount of a control parameter or in a form of a value of a control parameter, which is not limited by the present disclosure. The second relationship function indicates a relationship between a power generation and a maintenance cost of the wind turbine. The estimation unit may be further configured to: determine an estimated change of power generation corresponding to the candidate control strategy of the wind turbine, based on an adjustment of the candidate control strategy of the wind turbine relative to a present control strategy of the wind turbine and the first relationship function; determine a sum of the estimated power generation and the estimated change of power generation, as an estimated total power generation corresponding to the candidate control strategy of the wind turbine; determine an estimated maintenance cost corresponding to the candidate control strategy of the wind turbine, based on the estimated total power generation and the second relationship function; and determine the estimated revenue generated by the wind turbine using the candidate control strategy of the wind turbine in the target future period, based on the estimated total power generation, an electricity price, and the estimated maintenance cost. The estimated change of power generation, the estimated total power generation, and the estimated maintenance cost caused by the candidate control strategy of the wind turbine are determined sequentially, and an estimated income of power generation is further determined based on the electricity price and the estimated total power generation. Hence, a difference between the estimated income of power generation and the estimated maintenance cost can be obtained as the estimated revenue. The calculation is logically clear, ensuring the reliability of the estimated result. It should be understood that the first relationship function may be obtained through preliminary simulation and reflects a relationship between a change of power generation and an adjustment amount of the control strategy of the wind turbine. As mentioned above, the control strategy adopted by the wind turbine is reflected by values of parameters. Therefore, adjustment on the candidate control strategy of the wind turbine may be reflected as an adjustment of a value of a specific parameter. Here, the adjustment of a value may be an absolute value or a relative value, as long as it reflects the adjustment. The second relationship function may be obtained based on a historical power generation and a historical maintenance cost. Data amount of the historical power generation and the historical maintenance cost increases as time elapses, and therefore the second relationship function can be updated continuously to improve an accuracy thereof.

Optionally, the power generation performance evaluation apparatus further includes an optimization unit (not shown in the figure). The optimization unit may be configured to adjust the candidate control strategy of the wind turbine based on the estimated revenue, to obtain an optimized control strategy of the wind turbine. For each candidate control strategy of the wind turbine, an estimated revenue may be determined by the optimization unit. In view of this, one of multiple candidate control strategies of the wind turbine may be selected, based on the estimated revenues, as the optimized control strategy of the wind turbine, realizing a proactive update of a subsequent control strategy and operation and maintenance strategy of the wind turbine. It should be understood that selection from the multiple candidate control strategies of the wind turbine may be implemented by: enumerating the candidate control strategies of the wind turbine in advance, calculating the estimated revenue of each of the candidate control strategies, and then selecting one from the candidate control strategies; or giving an initial value of a candidate control strategy of the wind turbine, and then performing iterative calculation on the candidate control strategy with a purpose of the estimated revenue meeting a preset condition (for example, but not limited to, maximizing the estimated revenue), to obtain the optimized control strategy of the wind turbine. It should be further understood that in a case where the target future period is in a quantity of more than one, the optimized control strategy of the wind turbine may be determined separately for each target future period. In this case, to determine the optimized control strategy of the wind turbine through iterative calculation, the calculation may be performed with a purpose of a sum of estimated revenues in multiple target future periods meeting a preset condition, so that overall revenue is considered.

It should be noted that, corresponding to the aforementioned system for power generation performance evaluation, the acquisition unit 601, the determination unit 602, the consolidation unit 603, and the prediction unit 604 in the present disclosure may be integrated to the power generation performance evaluator for the wind turbine; and the estimation unit and the optimization unit may be integrated to the parameter optimizer for the wind power.

The power generation performance evaluation method for a wind turbine according to the embodiments of the present disclosure may be written as a computer program and stored on a computer-readable storage medium. When instructions corresponding to the computer program are executed by a processor, the power generation performance evaluation method for a wind turbine as described above can be implemented. Examples of the computer-readable storage medium include: a read-only memory (ROM), a random-access programmable read-only memory (PROM), an electrically erasable programmable read only memory (EEPROM), a random-access memory (RAM), a dynamic random-access memory (DRAM), a static random-access memory (SRAM), a flash memory, a non-volatile memory, a CD-ROM, a CD-R, a CD+R, a CD-RW, a CD+RW, a DVD-ROM , a DVD-R, a DVD+R, a DVD-RW, a DVD+RW, a DVD-RAM, a BD-ROM, a BD-R, a BD-R LTH, a BD-RE, a Blue-ray or optical disk storage, a hard disk drive (HDD), a solid state Hard disk (SSD), a card storage (such as a multimedia card, a secure digital (SD) card or an XD card), a magnetic tape, a floppy disk, a magneto-optical data storage device, an optical data storage device, a hard disk, a solid state disk and any other devices configured to store a computer program and any associated data, data files and data structures in a non-transitory manner, and provide the computer program and the associated data, data files and data structures to a processor or computer to enable the processor or computer to execute the computer program. In an example, the computer program and any associated data, data files and data structures are distributed over a networked computer system such that the computer program and the associated data, data files and data structures are stored, accessed and executed in a distributed fashion by one or more processors or computers.

Figure 7 is a block diagram of a computer device according to an embodiment of the present disclosure.

Reference is made to Figure 7. A computer device 700 includes at least one memory 701 and at least one processor 702. A set of computer-executable instructions is stored in the at least one memory 701. The set of computer-executable instructions, when executed by the at least one processor 702, performs the power generation performance evaluation method for a wind turbine according to any of the exemplary embodiments of the present disclosure.

As an example, the computer device 700 may be a PC computer, a tablet, a personal digital assistant, a smart phone, or other device capable of executing the above instruction sets. Here, the computer device 700 does not have to be a single electronic device, but may be a collection of apparatus or circuits capable of executing the above instructions (or set of instructions) individually or jointly. Alternatively, the computer device 700 may be part of an integrated control system or system manager, or may be configured as a portable electronic device connected locally or remotely via an interface (for example, via wireless transmission).

In the computer device 700, a processor 702 may include a central processing unit (CPU), a graphics processing unit (GPU), a programmable logic device, a dedicated processor system, a micro-controller, or a micro-processor. As an example, not a limitation, the processor may further include an analog processor, a digital processor, a micro-processor, a multi-core processor, a processor array, a network processor, and the like.

The processor 702 may execute instructions or code stored in a memory 701. The memory 701 may further store data. The instructions and data may be transmitted and received over a network via a network interface device. The network interface device may utilize any of known transmission protocols.

The memory 701 may be integrated with the processor 702, for example, an RAM or flash memory may be arranged within an integrated circuit microprocessor or the like. In addition, the memory 701 may include a stand-alone device, such as an external disk drive, a storage array, or any other storage device applicable to a database system. The memory 701 and the processor 702 may be operatively coupled to each other, or may communicate with each other through an I/O port, a network connection, or the like, so that the processor 702 can read files stored in memory.

Additionally, the computer device 700 may further include a video display (such as a liquid crystal display) and a user interaction interface (such as a keyboard, a mouse, and a touch input device). All components of the computer device 700 may be connected to each other via a bus and/or network.

The method and apparatus described in the present disclosure are targeted at wind turbines in use in a wind power plant. The method and apparatus require no measurement apparatus to be installed additionally, and thereby are highly portable. Based on the SCADA data generated by the real-time operation of a wind turbine in service, including a wind speed distribution, a real-time power of the wind turbine, and the like, the power generation performance of the wind turbine during the operational periods is evaluated by eliminating the influence of the external environment and considering only the influence of the wind turbine itself. Based on the historical power generation performance factor obtained in the evaluation, a change in the power generation performance of the wind turbine during the operational periods can be determined, and a trend of the power generation performance of the wind turbine can be obtained, and thereby a future power generation performance of the wind turbine can be speculated. Furthermore, according to the present disclosure, from a comprehensive consideration of the speculation, a maintenance cost, an on-grid electricity price, and a target revenue set by a user, an optimized control strategy of the wind turbine can be determined, in order to cope with different scenarios such as maintaining the existing power generation status, accelerating production to obtain maximum revenues, and decommissioning and replacement, so that the wind turbine can meet user expectations.

The specific embodiments of the present disclosure are described in detail above. Although some embodiments of the present disclosure are shown and described, those skilled in the art should understand that modifications and alternations can be made to the embodiments without departing from the principle and spirit of the present disclosure, whose scope is defined by the claims and equivalents thereof. Such modifications and alternations shall fall within the protection scope of the claims of the present disclosure.

**Claims**

1. A power generation performance evaluation method for a wind turbine, comprising:

   acquiring historical operational data of the wind turbine in each of n historical periods, where n is a positive integer;
   determining, based on the historical operational data, a practical capacity factor and an theoretical capacity factor of the wind turbine in each of the n historical periods;
   determining, based on the practical capacity factor and the theoretical capacity factor in each of the n historical periods, a historical power generation performance factor of the wind turbine in the each of the n historical periods;
   obtaining a trend of power generation performance, based on the historical power generation performance factors in the n historical periods; and
   determining, based on the trend of power generation performance, an estimated power generation performance factor of the wind turbine in a target future period, wherein the estimated power generation performance factor is for estimating the power generation performance in the target future period.

2. The power generation performance evaluation method according to claim 1, wherein the determining, based on the historical operational data, the practical capacity factor and the theoretical capacity factor of the wind turbine in each of the n historical periods comprises:

   determining, based on the historical operational data, a ratio of a practical value of a power generation indicator to a rated value of the power generation indicator of the wind turbine in each of the n historical periods, to obtain the practical capacity factor, wherein the power generation indicator comprises at least one of a power generation duration, an on-grid electricity or a power; and
   determining, based on the historical operational data, a ratio of an theoretical average power to a rated power of the wind turbine in each of the n historical periods, to obtain the theoretical capacity factor.

3. The power generation performance evaluation method according to claim 2, wherein in a case where the power generation indicator comprises the power, the historical operational data comprises a practical power curve, a plurality of wind speed intervals, a frequency of each of the wind speed intervals, and the rated power, and the determining, based on the historical operational data, the ratio of the practical value of the power generation indicator to the rated value of the power generation indicator of the wind turbine in each of the n historical periods, to obtain the practical capacity factor, comprises:

for each of the n historical periods,
determining a practical power average of each of the wind speed intervals based on the practical power curve;
determining an expectation of the practical power average as a practical average power of the wind turbine in the historical period, based on the practical power average and the frequency of each of the wind speed intervals; and
determining the practical capacity factor based on a ratio of the practical average power of the wind turbine in the historical period to the rated power.

4. The power generation performance evaluation method according to claim 3, wherein the historical operational data further comprises a theoretical power curve, and the determining, based on the historical operational data, the ratio of the theoretical average power to the rated power of the wind turbine in each of the n historical periods, to obtain the theoretical capacity factor, comprises:

for each of the n historical periods,
determining a theoretical power average of each of the wind speed intervals based on the theoretical power curve;
determining an expectation of the theoretical power average as the theoretical average power of the wind turbine in the historical period, based on the theoretical power average and the frequency of each of the wind speed intervals; and
determining the theoretical capacity factor based on a ratio of the theoretical average power of the wind turbine in the historical period to the rated power.

5. The power generation performance evaluation method according to claim 4, wherein:

the practical power average is an average of a practical power within a wind speed interval; and/or
the theoretical power average is obtained by interpolating in the theoretical power curve based on an average wind speed in each of the wind speed intervals.

6. The power generation performance evaluation method according to claim 2, wherein the historical operational data comprises a wind speed distribution parameter and a rated wind speed, the wind speed distribution parameter is for describing a distribution probability of wind speed, and wherein the determining, based on the historical operational data, the ratio of the theoretical average power to the rated power of the wind turbine in each of the n historical periods, to obtain the theoretical capacity factor, comprises:

for each of the n historical periods,
determining an expectation of the third power of a wind speed based on the wind speed distribution parameter; and
determining a ratio of the expectation of the third power of the wind speed to the third power of the rated wind speed, to obtain the theoretical capacity factor.

7. The power generation performance evaluation method according to claim 6, wherein:

the wind speed distribution parameter comprises a probability density function of wind speed; or
the wind speed distribution parameter comprises a plurality of wind speed intervals and frequencies of the respective wind speed intervals.

8. The power generation performance evaluation method according to any one of claims 1 to 7, further comprising:

determining an estimated power generation of the wind turbine in the target future period based on the estimated power generation performance factor; and
determining an estimated revenue generated by the wind turbine using a candidate control strategy of the wind turbine in the target future period, based on the estimated power generation, the candidate control strategy of the wind turbine and a revenue-related variable, wherein the revenue-related variable is a variable needed to determine a power generation revenue of the wind turbine.

9. The power generation performance evaluation method according to claim 8, wherein the revenue-related variable comprises an electricity price in the target future period, a predetermined first relationship function and a predetermined second relationship function, the first relationship function indicates a relationship between a change of power generation and an adjustment of a control strategy of the wind turbine, the second relationship function indicates a relationship between the power generation and a maintenance cost of the wind turbine, and
the determining the estimated revenue generated by the wind turbine using the candidate control strategy of the wind turbine in the target future period, based on the estimated power generation, the candidate control strategy of the wind turbine and the revenue-related variable, comprises:

> determining an estimated change of power generation corresponding to the candidate control strategy of the wind turbine, based on an adjustment of the candidate control strategy relative to a present control strategy of the wind turbine and the first relationship function;
> determining a sum of the estimated power generation and the estimated change of power generation, as an estimated total power generation corresponding to the candidate control strategy of the wind turbine;
> determining an estimated maintenance cost corresponding to the candidate control strategy of the wind turbine, based on the estimated total power generation and the second relationship function; and
> determining the estimated revenue generated by the wind turbine using the candidate control strategy of the wind turbine in the target future period, based on the estimated total power generation, the electricity price, and the estimated maintenance cost.

10. The power generation performance evaluation method according to claim 8, further comprising:
adjusting the candidate control strategy of the wind turbine based on the estimated revenue, to obtain an optimized control strategy of the wind turbine.

11. A power generation performance evaluation apparatus for a wind turbine, comprising:

> an acquisition unit, configured to acquire historical operational data of the wind turbine in each of n historical periods, where n is a positive integer;
> a determination unit, configured to determine, based on the historical operational data, a practical capacity factor and a theoretical capacity factor of the wind turbine in each of the n historical periods;
> the determination unit is further configured to determine, based on the practical capacity factor and the theoretical capacity factor in each of the n historical periods, a historical power generation performance factor of the wind turbine in each of the n historical periods;
> a consolidation unit, configured to obtain a trend of power generation performance, based on the historical power generation performance factors in the n historical periods; and
> a prediction unit, configured to determine, based on the trend of power generation performance, an estimated power generation performance factor of the wind turbine in a target future period, wherein the estimated power generation performance factor is for estimating the power generation performance in the target future period.

12. A computer-readable storage medium, wherein instructions in the computer-readable storage medium, when executed by at least one processor, cause the at least one processor to perform the power generation performance evaluation method according to any one of claims 1 to 10.

13. A computer device, comprising:

> at least one processor; and
> at least one memory storing computer executable instructions,
> wherein the computer executable instructions, when executed by the at least one processor, cause the at least one processor to perform the power generation performance evaluation method according to any one of claims 1 to 10.

Acquire historical operational data of the wind turbine in each of n historical periods — S101

Determine, based on the historical operational data, a practical capacity factor and a theoretical capacity factor of the wind turbine in each of the n historical periods — S102

Determine, based on the practical capacity factor and the theoretical capacity factor in each of the n historical periods, a historical power generation performance factor of the wind turbine in each of the n historical periods — S103

Obtain a trend of power generation performance, based on the historical power generation performance factors in the n historical periods — S104

Determine, based on the trend of power generation performance, an estimated power generation performance factor of the wind turbine in a target future period — S105

**FIG.1**

**FIG.2**

**FIG.3**

FIG.4

EP 4 629 125 A1

```
SCADA data  →  Power generation
               performance evaluator
               for wind turbine       →  Estimated power
                                          generation
                                          performance factor  →  Parameter optimizer
                                                                 for wind power      →  Optimized control
                                                                                        strategy of the wind
                                                                                        turbine
```

Set value

FIG.5

600

| Acquisition unit | 601 | Determination unit | 602 |
| Consolidation unit | 603 | Prediction unit | 604 |

**FIG.6**

700

| Memory | 701 |
| Processor | 702 |

**FIG.7**

## INTERNATIONAL SEARCH REPORT

| International application No. |
|---|
| **PCT/CN2023/117205** |

**A. CLASSIFICATION OF SUBJECT MATTER**

G06F30/20(2020.01)i; G06F119/02(2020.01)i

According to International Patent Classification (IPC) or to both national classification and IPC

**B. FIELDS SEARCHED**

Minimum documentation searched (classification system followed by classification symbols)

IPC:G06F,G06Q

Documentation searched other than minimum documentation to the extent that such documents are included in the fields searched

Electronic data base consulted during the international search (name of data base and, where practicable, search terms used)

CNTXT, CNABS, ENTXT, WOTXT, USTXT, EPTXT, JPTXT, VEN, CNKI: 风力, 发电, 风速, 功率, 理论容量, 实际容量, 额定, 评估, 预测, 预估, 收益, wind, power, energy, generator, generation, velocity, theoretical, actual, capacity, rated, specified, value, estimate, evaluate

**C. DOCUMENTS CONSIDERED TO BE RELEVANT**

| Category* | Citation of document, with indication, where appropriate, of the relevant passages | Relevant to claim No. |
|---|---|---|
| PX | CN 116266247 A (XINJIANG GOLDWIND SCIENCE & TECHNOLOGY CO., LTD.) 20 June 2023 (2023-06-20)<br>claims 1-13 | 1-13 |
| A | CN 114881379 A (DONGFANG ELECTRIC WIND POWER CO., LTD.) 09 August 2022 (2022-08-09)<br>description, paragraphs 37-50, and figures 1-4 | 1-13 |
| A | CN 111400845 A (BEIJING GOLDWIND SCIENCE & CREATION WINDPOWER EQUIPMENT CO., LTD.) 10 July 2020 (2020-07-10)<br>entire document | 1-13 |
| A | CN 109345113 A (BEIJING SHIYI TECHNOLOGY CO., LTD.) 15 February 2019 (2019-02-15)<br>entire document | 1-13 |
| A | CN 114510815 A (XI'AN THERMAL POWER RESEARCH INSTITUTE CO., LTD.) 17 May 2022 (2022-05-17)<br>entire document | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 November 2023** | **29 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/117205** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113204886 A (HUANENG CHANGYI WIND POWER CO., LTD.) 03 August 2021 (2021-08-03) <br> entire document | 1-13 |
| A | US 2016223600 A1 (ENVISION ENERGY (JIANGSU) CO., LTD.) 04 August 2016 (2016-08-04) <br> entire document | 1-13 |

Form PCT/ISA/210 (second sheet) (July 2022)

**INTERNATIONAL SEARCH REPORT**
Information on patent family members

International application No.

**PCT/CN2023/117205**

| Patent document cited in search report | | | Publication date (day/month/year) | Patent family member(s) | | | Publication date (day/month/year) |
|---|---|---|---|---|---|---|---|
| CN | 116266247 | A | 20 June 2023 | None | | | |
| CN | 114881379 | A | 09 August 2022 | None | | | |
| CN | 111400845 | A | 10 July 2020 | None | | | |
| CN | 109345113 | A | 15 February 2019 | None | | | |
| CN | 114510815 | A | 17 May 2022 | None | | | |
| CN | 113204886 | A | 03 August 2021 | None | | | |
| US | 2016223600 | A1 | 04 August 2016 | CN | 104915747 | A | 16 September 2015 |

Form PCT/ISA/210 (patent family annex) (July 2022)